# EUROPÄISCHE PATENTSCHRIFT

(11) **EP 0 623 624 B1**
(45) Veröffentlichungstag und Bekanntmachung des Hinweises auf die Patenterteilung: **19.08.1998**
(21) Anmeldenummer: 93118245.5
(22) Anmeldetag: 11.11.1993
(51) Int. Cl.: C07F 5/06

(54) **Verfahren zur Herstellung von Aluminoxanen**
Process for the preparation of aluminoxanes
Procédé de préparation d'aluminoxanes

(30) Priorität: 06.05.1993 DE 4314986
(43) Veröffentlichungstag der Anmeldung: 09.11.1994
(73) Patentinhaber: Witco GmbH, 59180 Bergkamen (DE)
(72) Erfinder: Becker, Ralf-Jürgen, Dr., D-59075 Hamm (DE); Gürtzgen, Stefan, Dr., D-42369 Wuppertal (DE); Schrader, Rolf, Dr., D-50427 Unna (DE)

(56) Entgegenhaltungen:
- EP-A- 0 257 695
- US-A- 4 037 825
- US-A- 4 772 736
- US-A- 4 908 463
- US-A- 4 968 827
- US-A- 5 041 585
- A. Wolinska, J. Organomet. Chem. 234, 1-6 (1982)
- M. Boleslawski et al., J. Organomet. Chem. 116, 285-289(1976)

## Beschreibung

Die Erfindung betrifft die Herstellung von Aluminoxanen durch Zugabe von Wasser zu einer Lösung von Trialkylaluminium in einem inerten Lösemittel, wobei man das zur Umsetzung erforderliche Wasser über eine Mischdüse in einen statischen Mischer, insbesondere einen Strahlschlaufenreaktor, dosiert.

Längerkettige oligomere und/oder polymere Alkylaluminoxane der vereinfachten Strukturen 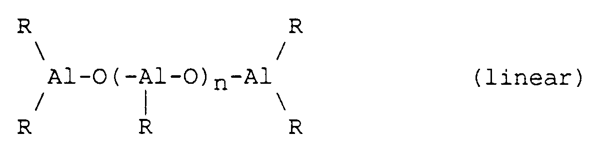 und 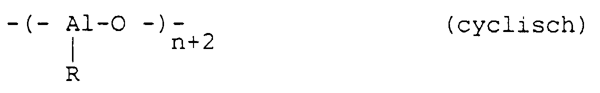 sind bekannte Verbindungen, die als Katalysator-Komponenten bei der Herstellung hochaktiver Polyolefin-Katalysatoren verwendet werden, wobei zum Teil oligomere Methylaluminoxane (MAO) mit R = CH₃ als bevorzugt genannt werden. Der Oligomerisationsgrad n spielt dabei für die Aktivität der Polyolefin-Katalysatoren eine wichtige Rolle, wie durch Bestimmung der Abhängigkeit der Katalysatoraktivität von der mittleren Molmasse der verwendeten Aluminoxane festgestellt werden konnte (Lit.:.W. Kaminsky, Nachr. Chem. Tech. Lab. 29, 373-7 (1981); W. Kaminsky et.al., Makromol. Chem., Macromol. Symp. 3, 377-87 (1986)).

Als bekanntes Herstellungsverfahren für Alkylaluminoxane wird dabei die Umsetzung von Aluminiumtrialkylen mit Wasser in inerten Kohlenwasserstoffen genannt. Jedoch werden zur Herstellung von oligomeren Methylaluminoxanen (MAO) aus Trimethylaluminium (TMA) auch andere Methoden als bevorzugt genannt, da aus der Literatur bekannt ist, daß sich nach der z. B. in US-PS-3 242 099 näher beschriebenen Herstellungsweise durch langsame Zugabe von Wasser zu Trimethylaluminium (TMA) MAO nur schwer und in sehr schlechter Ausbeute herstellen läßt (EP-A-0 108 339); zudem werden dabei Produkte erhalten, die zusammen mit der Übergangsmetall-Komponente keine hochaktiven Katalysator-Systeme ergeben (EP-B-0 069 951).

Gemäß US-PS-4 924 018 wird z. B. zu einer Lösung von Trimethylaluminium eine Emulsion von 0,5 bis 10 % Wasser in Toluol dosiert. Die Konzentration der entstehenden MAO-Lösung und damit auch die Raum-Zeit-Ausbeute ist sehr gering.

Weiter wird im Labormaßstab in einem Rührreaktor die Zugabe von Wasser in eine Lösung von Triisobutylaluminium (TIBA) (US-PS-4 772 736) im Scherfeld eines Rührers beschrieben. Die Übertragung dieses Verfahrens auf einen großtechnischen Maßstab wäre aufgrund der überproportional steigenden Rührenergie völlig unwirtschaftlich, wenn nicht gar unmöglich.

Gemäß US-PS 4 908 463 läßt man zwei Teilströme bestehend aus a) einer Dispersion aus Wasser und inerten Lösungsmitteln dispergiert in einem statischen Mischer sowie b) einer Lösung von Trialkylaluminiumverbindungen in einem inerten Lösungsmittel in einem T-förmigen Reaktionsrohr frontal aufeinanderstoßen. Die Mischung wird dann unmittelbar aus der Reaktionszone entfernt und ohne weiteren Wasserzusatz in einem Rührkessel beendet.

Überraschenderweise wurde nun gefunden, daß Aluminoxane, insbesondere auch Methylaluminoxan, direkt in Lösungen hoher Konzentration und in hoher Ausbeute aus den entsprechenden Aluminiumtrialkylen hergestellt werden können, wenn die Umsetzung in einem statischen Mischer durchgeführt wird. Die mittlere Molmasse der so entstehenden Aluminoxane kann gezielt für die Erfordernisse in der Olefinpolymerisation eingestellt werden.

Gegenstand der Erfindung ist demnach ein Verfahren zur Herstellung von Aluminoxanen der allgemeinen Formel R₂AlO[RAlO]ₙAlR₂ und/oder -[-RAlO-]-ₙ₊₂ wobei bedeuten: R: eine C₁-C₁₀-Alkylgruppe (verzweigt oder linear), wobei die Reste R gleich oder verschieden sein können, n: ganze Zahlen von 0 - 20, durch Zugabe von Wasser zu einer Lösung von Trialkylaluminium in einem aliphatischen, cycloaliphatischen oder aromatischen Kohlenwasserstoff, dadurch gekennzeichnet, daß man das zur Umsetzung erforderliche Wasser über eine Mischdüse in einen statischen Mischer dosiert.

Ein weiterer Gegenstand der Erfindung ist dadurch gekennzeichnet, daß man als statischen Mischer einen Strahlschlaufenreaktor verwendet.

Ein weiterer Gegenstand der Erfindung ist dadurch gekennzeichnet, daß das Wasser in einem Volumenverhältnis von 1 : 500 bis 1 : 40000 in den Reaktor eindosiert wird.

Ein weiterer Gegenstand der Erfindung ist dadurch gekennzeichnet, daß die Reaktion bei -20 °C bis 100 °C durchgeführt wird.

Ein weiterer Gegenstand der Erfindung ist dadurch gekennzeichnet, daß das Molverhältnis von H₂O/Aluminiumalkylverbindung im Bereich von 0,6 - 1,2 : 1 liegt.

Ein weiterer Gegenstand der Erfindung ist dadurch gekennzeichnet, daß das Molverhältnis von H₂O/Aluminiumtrialkylverbindung im Bereich von 0,65 : 1 bis 0,75 : 1 liegt, wenn als Aluminiumtrialkylverbindung Trimethylaluminium eingesetzt wird.

Ein weiterer Gegenstand der Erfindung ist dadurch gekennzeichnet, daß das Wasser in einem Volumenstromverhältnis von 1 : 2000 bis 1 : 20000 in den Reaktor eindosiert wird.

In statischen Mischern erfolgt ohne bewegte Einbauten eine zwangsweise Homogenisierung der zu mischenden Komponenten. Hier wird - im Gegensatz zu den dynamischen Mischern - das zu mischende Gut an den unbeweglichen (statischen) Einbauten des Behälters vorbeibewegt.

Diese Einbauten können geometrisch in den verschiedensten Variationen gestaltet sein, wobei sie als eigentliche Mischelemente eine intensive In-line-Vermischung der Edukt-/ Produktströme bewirken.

Als statischer Mischer sind zur Durchführung des erfindungsgemäßen Verfahrens insbesondere Strahlschlaufenreaktoren (SSR) geeignet.

Die Funktionsweise des erfindungsgemäß bevorzugt verwendeten SSR, des BURDOSA-REAKTORS, wie er beispielsweise in der US-PS 40 37 825 beschrieben wird, beruht auf einem Flüssigkeitstreibstrahl im Innenrohr, der dem gesamten Reaktorinhalt einen Impuls überträgt und damit eine hohe Umlaufströmung erzeugt. Hierdurch ist der Flüssigkeitsumlaufstrom im Reaktor ca. 8 bis 10fach höher als der Treibstrahlvolumenstrom.

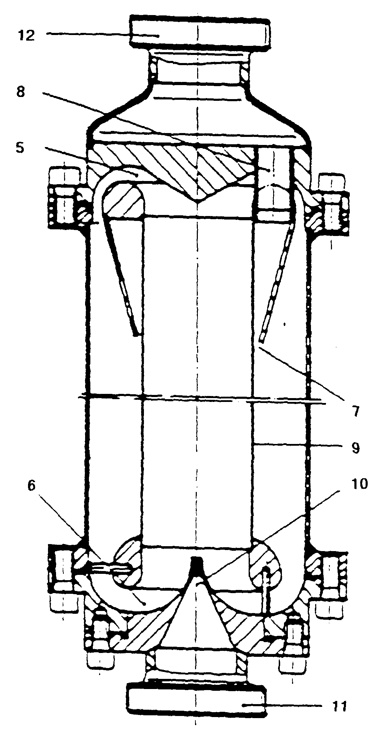

Die Strömung im Reaktor verläuft dabei etwa folgendermaßen (Abbildung 2): Das im unteren Zentrum (11) des Reaktors über die Treibstrahldüse (10) eintretende Mischgut wird durch eine obere Umlenkung (5) an der Außenwand zurückgeführt und mit Hilfe einer unteren Umlenkung (6) zwangsläufig neben den Treibstrahl geleitet. Bei jeder weiteren Umlenkung verschiebt sich die zurückgeführte Flüssigkeitsschicht immer mehr zur Außenwand des Einsteckrohrs (9) hin, bis der Ausgangsschlitz (7) erreicht ist und das Mischgut über die Produktaustrittsöffnung (8) und den Produktausgang (12) aus dem Reaktor entfernt wird.

In dem erfindungsgemäßen Verfahren wird in einem Volumenstromverhältnis von 1 : 500 bis 1 : 40.000, vorzugsweise 1 : 2.000 bis 1 : 20.000, über die Mischdüse Wasser in den Strahlschlaufenreaktor dosiert.

Der Strahlschlaufenreaktor sorgt wegen der hohen Umlaufströmung für eine gute und extrem schnelle Vermischung der aluminiumalkylhaltigen Lösung mit Wasser. Aufgrund der hohen Primärdispergierung kann eine lokal zu hohe Konzentration an Wasser vermieden werden, die ansonsten zu Ausbeuteverlusten und unerwünscht hohem Anteil an unumgesetztem Aluminiumtrialkyl führt.

Auch bei hohen Dosierraten kann eine lokale Überhitzung, bedingt durch die stark exotherme Reaktion von Aluminiumalkylen mit Wasser, vermieden werden.

Das erfindungsgemäße Verfahren zeichnet sich gegenüber dem Stand der Technik gemäß US-PS-4 772 736 durch eine höhere Raum-Zeit-Ausbeute, einfachere praktische Herstellbarkeit der Alkylaluminiumoxane und eine verbesserte Stoff- und Energiedissipation sowie eine deutlich höhere Ausbeute, bezogen auf Aluminium, aus. Darüber hinaus kann der mittlere Oligomerisationsgrad n, der in der mittleren Molmasse des Reaktionsproduktes zum Ausdruck kommt, durch geeignete Dosierung der Reaktionspartner und Steuerung der Reaktionsparameter gezielt beeinflußt werden. So kann das Molverhältnis H20/Aluminiumtrialkyl, insbesondere auch bei Trimethylaluminium (TMA) auf den gewünschten Wert eingestellt werden. Dies ist von besonderer Bedeutung, da die Aktivität von Aluminoxanen als Cokatalysator in der Olefinpolymerisation offenbar vom Oligomerisationsgrad des verwendeten Aluminoxans abhängig ist (Lit.:.W. Kaminsky, Nachr. Chem. Tech. Lab. 29, 373-7 (1981); W. Kaminsky et.al., Makromol. Chem., Macromol. Symp. 3, 377-87 (1986))

Für die erfindungsgemäße Herstellung der Aluminoxane können Trialkylaluminium-Verbindungen der Formel AL(R)₃ eingesetzt werden, worin R Alkylreste mit 1 bis 20 C-Atomen sind, wie Ethyl-, Propyl, Butyl-, Pentyl-, Oktyl-, 2-Ethyl-hexyl-, Isoprenyl-Reste, wobei auch Trimethylaluminium, welches aufgrund seiner hohen Reaktivität besonders schwierig in einem kontrollierten Verfahren zu einem definierten Produkt umzusetzen ist, unproblematisch eingesetzt werden kann.

Das Molverhältnis von H2O/Aluminiumtrialkyl kann je nach Kettenlänge des Alkylrestes auf den Bereich von 0,6 - 1,2 : 1, vorzugsweise auf den Bereich von 1 : 1, eingestellt werden. Für das bevorzugte Trimethylaluminium wird das Verhältnis erfindungsgemäß im Bereich von 0,65 : 1 bis 0,75 : 1 gehalten.

Man erhält in diesem Bereich ein sehr aktives Methylaluminoxan (MAO), das ein ausreichend hohes mittleres Molekulargewicht und eine gute Löslichkeit in Alkylbenzolen, z. B. Toluol aufweist. Der Anteil an unlöslichen Nebenprodukten ist gering und kann leicht durch die üblichen Methoden abgetrennt werden.

Die Edukte werden dabei in solchen Mengen eingesetzt, daß die Konzentration des Aluminoxans im verwendeten Lösungsmittel im Bereich von 1- 20 Gew.-%, vorzugsweise 1 - 10 Gew.-%, liegt.

Als Lösungsmittel eignen sich insbesondere aliphatische, cycloaliphatische oder aromatische Kohlenwasserstoffe wie Pentan, Hexan, Heptan, Octan, Cyclohexan, Methylcyclohexan und im Falle der Herstellung von Methylaluminoxan vorzugsweise Toluol und Xylol.

Wegen der Reaktivität der Organoaluminiumverbindungen gegenüber Feuchtigkeit und Luftsauerstoff ist unter trockener Inertgasatmosphäre zu arbeiten.

Die Umsetzung wird bei Temperaturen zwischen -20 °C und +100 °C, vorzugsweise +10 °C und +30 °C, ausgeführt.

Das erhaltene Reaktionsprodukt ist eine Lösung eines oligomeren Alkylaluminoxans, welche nicht umgesetztes Trialkylaluminium in freier und/oder komplexierter Form enthält.

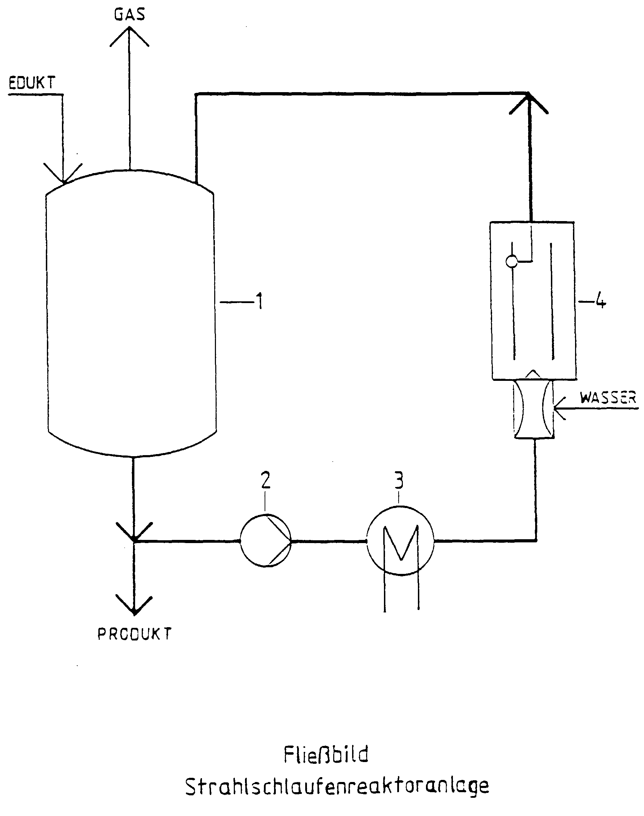

Die Abbildung 1 zeigt das Anlagenschema für einen Strahlschlaufenreaktor (SSR). In einem Vorratstank 1 wird die Lösung von einem Aluminiumalkyl in einem Lösungsmittel vorgelegt. Über eine Pumpe 2 wird diese Lösung über einem Wärmeaustauscher 3 gekühlt in den SSR 4 gefördert und mit Wasser in einem bestimmten Volumenstromverhältnis von z. B. 1 : 10.000 vermischt. Durch die Rückvermischung im SSR wird die lokale Überhitzung durch die exotherme Reaktion vermieden. Das bei Alkylen mit kurzkettigen Alkylgruppen entstehende Gas (z. B. Methan, Butan) wird von der Flüssigkeit getrennt.

### Beispiele

### Beispiel 1

Im Vorratsgefäß wurden 628 kg einer 16 %igen Trimethylaluminium(TMA)-Lösung in Toluol vorgelegt. Diese Lösung wurde über den Strahlschlaufenreaktor (SSR) - Typ Burdosa-Reaktor -, einen Wärmeaustauscher und einen Gasabscheider im Kreis gepumpt (Abbildung 1). Zu dieser TMA/Toluol-Lösung wurden bei 25 °C im SSR im Volumenstromverhältnis von 1 : 6.000 17 kg Wasser (Molverhältnis 1 : 0,68) dosiert. Der MAO-Gehalt der Lösung betrug 10,2 %; die Ausbeute, bezogen auf den Gehalt an Aluminium in der Lösung, war 92 %. Die kryoskopische Bestimmung der mittleren Molmasse ergab 1000g/mol. Dies entspricht rechnerisch einem mittleren Oligomerisationsgrad von ca.15.

Ein Vergleich (siehe Tabelle) zeigt die hohe Ausbeute an gelöstem Aluminiumalkyl im Gegensatz zum Stand der Technik (US-A-4 772 736).

**Tabelle**

| | Einsatz Al (%) | Produkt Al (%) | Ausbeute (%), bezogen auf Al |
|---|---|---|---|
| Vergleichsbeispiele gemäß US-PS 4 772 736 | 7,5 | 5,85 | 78,0 |
| | 8,1 | 6,5 | 80,2 |
| | | | |
| Beispiel 1 | 6,0 | 5,56 | 92,0 |

### Beispiel 2

Analog Beispiel 1 wurden im Vorratsgefäß 495 kg n-Heptan, 82,5 kg TMA und 32,5 kg TIBA vorgelegt. Hierzu wurden in einem Volumenstromverhältnis von 1 : 2.000 15,0 kg Wasser über den SSR in den Kreislauf dosiert. Es wurden 497 kg einer 10,5 %igen Aluminoxanlösung in zu Beispiel 1 vergleichbarer Ausbeute erhalten.Die mittlere Molmasse wurde kryoskopisch zu 950 g/mol bestimmt.

### Beispiel 3

Im Vorratsgefäß wurden 628 kg einer 16 %igen Trimethylaluminium(TMA)-Lösung in Toluol vorgelegt. Diese Lösung wurde über den Strahlschlaufenreaktor (SSR) - Typ Burdosa-Reaktor -, einen Wärmeaustauscher und einen Gasabscheider im Kreis gepumpt (Abbildung 1). Zu dieser TMA/Toluol-Lösung wurden bei 25 °C im SSR im Volumenstromverhältnis von 1 : 20.000 17 kg Wasser (Molverhältnis 1 : 0,68) dosiert. Der MAO-Gehalt der Lösung betrug 10,4 %; die Ausbeute, bezogen auf den Gehalt an Aluminium in der Lösung, war 93,5 %. Die kryoskopische Bestimmung der mittleren Molmasse ergab 1000g/mol. Dies entspricht rechnerisch einem mittleren Oligomerisationsgrad von ca.15.

### Beispiel 4

Analog Beispiel 1 wurden im Vorratsgefäß 260 kg Cyclohexan und 178,3 kg Triisobutylaluminium vorgelegt. Hierzu wurden 7,7 kg Wasser (Verhältnis Wasser/TIBA = 0,48) über den SSR in den Kreislauf dosiert. Es entstanden 442 kg einer 30,2 %igen TIBAO-Lösung. Die Ausbeute bezogen auf den Al-Gehalt betrug 100%. Die kryoskopische Bestimmung der mittleren Molmasse ergab 400g/mol.

### Beispiel 5

Analog Beispiel 1 wurden im Vorratsgefäß 240 kg Hexan und 82,8 kg Triisobutylaluminium vorgelegt. Hierzu wurden 5,66 kg Wasser (Verhältnis Wasser/TIBA = 0,75) über den SSR in den Kreislauf dosiert. Es entstanden 293 kg einer 17,1 %igen Hexaisobutyltetraaluminoxanlösung (HIBAO, mittlere Molmasse: 1100 g/mol, Ausbeute bezogen auf Aluminium: 100 % der Theorie).

### Beispiel 6

Analog Beispiel 1 wurden 216,3 kg Heptan und 70,5 kg Triisobutylaluminium mit 6,22 kg Wasser (Verhältnis Wasser/TIBA = 0,97) zur Reaktion gebracht. Es wurden 239,5 kg einer 15,0 %igen Isobutylaluminoxanlösung erhalten (IBAO, mittlere Molmasse: 1800 g/mol, Ausbeute bezogen auf Aluminium: 98 % der Theorie).

## Patentansprüche

1. Verfahren zur Herstellung von Aluminoxanen der allgemeinen Formel R₂AlO[RAlO]ₙAlR₂ und/oder -[-RAlO-]-ₙ₊₂ wobei bedeuten:
R: eine C₁-C₁₀-Alkylgruppe (verzweigt oder linear), wobei die Reste R gleich oder verschieden sein können, n: ganze Zahlen von 0 - 20, durch Zugabe von Wasser zu einer Lösung von Trialkylaluminium in einem aliphatischen, cycloaliphatischen oder aromatischen Kohlenwasserstoff, welches dadurch gekennzeichnet ist, daß man das zur Umsetzung erforderliche Wasser über eine Mischdüse in einen statischen Mischer dosiert.

2. Verfahren gemäß Anspruch 1, dadurch gekennzeichnet, daß man als statischen Mischer einen Strahlschlaufenreaktor verwendet.

3. Verfahren gemäß Anspruch 1, dadurch gekennzeichnet, daß das Wasser in einem Volumenstromverhältnis von 1 : 500 bis 1 : 40000 in den Reaktor eindosiert wird.

4. Verfahren gemäß Ansprudh 1, dadurch gekennzeichnet, daß die Reaktion bei -20 °C bis +100 °C durchgeführt wird.

5. Verfahren gemäß Anspruch 1, dadurch gekennzeichnet, daß R eine Methylgruppe ist.

6. Verfahren gemäß Anspruch 1, dadurch gekennzeichnet, daß das Molverhältnis von H₂O/Aluminiumtrialkylverbindung im Bereich von 0,6 - 1,2 : 1 liegt.

7. Verfahren gemäß Anspruch 1, dadurch gekennzeichnet, daß das Molverhältnis von H₂O/Aluminiumtrialkylverbindung im Bereich von 0,65 : 1 bis 0,75 : 1 liegt, wenn als Aluminiumtrialkylverbindung Trimethylaluminium eingesetzt wird.

8. Verfahren gemäß Anspruch 8, dadurch gekennzeichnet, daß das Wasser in einem Volumenstromverhältnis von 1 : 2000 bis 1 : 20000 in den Reaktor eindosiert wird.

## Claims

1. Process for preparing aluminoxanes of the general formula R₂AlO[RAlO]ₙAlR₂ and/or -[-RAlO-]-ₙ₊₂, where:
R: a C₁-C₁₀-alkyl group (branched or linear), where the radicals R can be identical or different, n: an integer 0 - 20, by addition of water to a solution of trialkylaluminium in an aliphatic cycloaliphatic or aromatic hydrocarbon, characterized in that the water required for the reaction is metered into a static mixer via a mixing nozzle.

2. Process according to Claim 1, characterized in that the static mixer used is a jet loop reactor.

3. Process according to Claim 1, characterized in that the water is metered into the reactor in a volume flow ratio of from 1:500 to 1:40000.

4. Process according to Claim 1, characterized in that the reaction is carried out at from -20°C to +100°C.

5. Process according to Claim 1, characterized in that R is a methyl group.

6. Process according to Claim 1, characterized in that the molar ratio of H₂O/trialkylaluminium compound is in the range 0.6 - 1.2 : 1.

7. Process according to Claim 1, characterized in that the molar ratio of H₂O/trialkylaluminium compound is in the range from 0.65:1 to 0.75:1 when the trialkylaluminium compound used is trimethylaluminium.

8. Process according to Claim 8, characterized in that the water is metered into the reactor in a volume flow ratio of from 1:2000 to 1:20000.

## Revendications

1. Procédé de préparation d'aluminoxanes de formule générale R₂AlO[RAlO]ₙAlR₂ et/ou -[-RAlO-]-ₙ₊₂, dans laquelle
R représente un radical alcoyle en C₁-C₁₀ (ramifié ou linéaire), les radicaux R pouvant être identiques ou différents, et n représente un nombre entier de 0 à 20, par addition d'eau à une solution de trialcoylaluminium dans un hydrocarbure aliphatique, cycloaliphatique ou aromatique, caractérisé en ce que l'on dose l'eau nécessaire à la réaction par une buse mélangeuse dans un mélangeur statique.

2. Procédé suivant la revendication 1, caractérisé en ce que le mélangeur statique utilisé est une colonne à bulles à écoulement en boucle à jet.

3. Procédé suivant la revendication 1, caractérisé en ce que l'eau est ajoutée dans le réacteur avec un rapport des flux volumiques de 1:500 à 1:40.000.

4. Procédé suivant la revendication 1, caractérisé en ce que la réaction est réalisée entre -20°C et +100°C.

5. Procédé suivant la revendication 1, caractérisé en ce que R est un radical méthyle.

6. Procédé suivant la revendication 1, caractérisé en ce que le rapport molaire H₂O/composé de trialcoylaluminium se situe dans l'intervalle de 0,6 à 1,2:1.

7. Procédé suivant la revendication 1, caractérisé en ce que le rapport molaire H₂O/composé de trialcoylaluminium se situe dans l'intervalle de 0,65:1 à 0,75:1, lorsque le composé de trialcoylaluminium utilisé est le triméthylaluminium.

8. Procédé suivant la revendication 8, caractérisé en ce que l'eau est ajoutée dans le réacteur avec un rapport des flux volumiques de 1:2000 à 1:20.000.
